# EUROPÄISCHE PATENTANMELDUNG

(11) **EP 3 683 039 A1**
(43) Veröffentlichungstag der Anmeldung: **22.07.2020**
(21) Anmeldenummer: 19152826.4
(22) Anmeldetag: 21.01.2019
(51) Int. Cl.: B29C 64/336, B29C 64/209, B29C 64/227

(54) **ADDITIVES HERSTELLUNGSVERFAHREN, COMPUTERPROGRAMMPRODUKT UND FERTIGUNGSVORRICHTUNG**

(71) Anmelder: Flender GmbH, 46395 Bocholt (DE)
(72) Erfinder: Dinter, Ralf Martin, 45888 Gelsenkirchen (DE)
(74) Vertreter: Maier, Daniel Oliver

(57) **Zusammenfassung**

Die Erfindung betrifft ein Verfahren (100) zur additiven Herstellung eines Bauteils (10) das aus einer Mehrzahl an Materialschichten (11, 12, 14, 18) aufgebaut ist. Dabei werden eine Mehrzahl an beweglichen Abgabevorrichtungen (20, 22, 24, 28) eingesetzt. Das Verfahren (100) umfasset einen ersten Schritt (110), in dem ein Bereitstellen eines Substrats (16) zu einem Erzeugen der Materialschichten (11, 12, 14, 18) erfolgt. Das Verfahren umfasst auch einen zweiten Schritt (120), in dem ein Erzeugen einer ersten Materialschicht (12) auf dem Substrat (16) mittels einer ersten beweglichen Abgabevorrichtung (22) erfolgt. Ferner umfasst das Verfahren (100) einen dritten Schritt (130), in dem ein Erzeugen einer zweiten Materialschicht (14) auf der ersten Materialschicht (12) mittels einer zweiten beweglichen Abgabevorrichtung (24) erfolgt. Erfindungsgemäß werden der zweite und dritte Schritt (120, 130) zumindest teilweise gleichzeitig durchgeführt. Die Erfindung betrifft auch eine Fertigungsvorrichtung (50), die zur Durchführung des Verfahrens (100) ausgebildet ist, ein entsprechendes Computerprogrammprodukt (80), eine dementsprechende Steuereinheit (55) für eine Fertigungsvorrichtung (50), und ein mittels des erfindungsgemäßen Verfahrens (100) hergestelltes Bauteil (10).

## Beschreibung

Die Erfindung betrifft ein additives Herstellungsverfahren für Bauteile und ein Computerprogrammprodukt, das dazu ausgebildet ist, das erfindungsgemäße additive Herstellungsverfahren umzusetzen. Die Erfindung betrifft auch eine Fertigungsvorrichtung, die dazu ausgebildet ist, ein solches erfindungsgemäßes additives Herstellungsverfahren durchzuführen, insbesondere mittels eines erfindungsgemäßen Computerprogrammprodukts. Gleichermaßen betrifft die Erfindung ein Bauteil, das mittels eines erfindungsgemäßen Verfahrens hergestellt ist.

Aus WO 2015/125128 A1 ist eine Vorrichtung für additive Fertigung bekannt, die eine Mehrzahl an Abgabeköpfen für eine Abgabe eines Materials aufweist. Die Abgabeköpfe sind jeweils auf einer Traverse angebracht, die mit einer oder mehreren gemeinsamen Schienen verbunden sind. Die Abgabeköpfe sind so in einer gemeinsamen Ebene unabhängig voneinander beweglich.

Das Dokument CN 104260355 A offenbart einen 3D-Drucker mit einer Mehrzahl an Druckköpfen, die jeweils in einem Rahmen aufgenommen sind. Jeder der Druckköpfe ist in seinem zugehörigen Rahmen in einer durch den Rahmen definierten Ebene beweglich. Die Rahmen mit den einzelnen Druckköpfen sind, bezogen auf eine Arbeitsebene des 3D-Drucker, übereinander angeordnet.

In einer Vielzahl von Teilgebieten des Maschinenbaus besteht Bedarf an additiven Fertigungsmöglichkeiten, die eine hohe Fertigungsgeschwindigkeit bieten. Darüber hinaus weisen additiv gefertigte Werkstücke durch ihren Schichtaufbau anisotrope mechanische Eigenschaften auf, was wiederum konstruktive Beschränkungen bedeutet. Ein weiterer Nachteil bekannter additiver Fertigungsverfahren besteht darin, dass diese technisch aufwendig und entsprechend kostenintensiv sind. Es besteht deshalb Bedarf an einer Möglichkeit der additiven Fertigung, die ein hohes Maß an Fertigungsgeschwindigkeit bietet, werkstückorientierungsunabhängig ist und eine hohe Wirtschaftlichkeit bietet.

Die skizzierte Aufgabenstellung wird durch das erfindungsgemäße Herstellungsverfahren gelöst, mit dem additiv ein angestrebtes Bauteil herstellbar ist. Das herzustellende Bauteil weist eine Mehrzahl an Materialschichten auf, die aufeinander angebracht sind. Das Herstellungsverfahren nutzt eine Mehrzahl an beweglichen Abgabevorrichtungen, die jeweils dazu ausgebildet sind, einen Werkstoff abzugeben. Mittels des abzugebenden Werkstoffs werden im erfindungsgemäßen Herstellungsverfahren die Materialschichten des Bauteils hergestellt. Die Abgabevorrichtung kann beispielsweise als Druckkopf zum Abgeben eines Kunststoffmaterials oder eine Düse zum Abgeben eines Binder-Jetting-Materials oder eine Kaltgasdüse sein. Die beweglichen Abgabevorrichtungen können auch jeweils dazu ausgebildet sein, eine Kombination von Werkstoffen und/oder Hilfsstoffen gemischt oder separat anzugeben, beispielsweise ein Pulver und einen Klebstoff. In einem ersten Schritt wird ein Substrat bereitgestellt, das als Grundlage zum Herstellen des Bauteils dient. Das Substrat kann beispielsweise als eine Arbeitsfläche einer Fertigungsvorrichtung ausgebildet sein, auf der das erfindungsgemäße Herstellungsverfahren durchgeführt wird. Alternativ oder ergänzend kann das Substrat auch als ein vorläufiges Werkstück oder ein Halbzeug sein, das bereitgestellt wird und im Herstellungsverfahren durch die beweglichen Abgabevorrichtungen mit Materialschichten versehen wird.

In einem weiteren Schritt erfolgt ein Erzeugen einer ersten Materialschicht auf dem Substrat mittels einer ersten Abgabevorrichtung. Dabei wird von der ersten Abgabevorrichtung der Werkstoff auf das Substrat abgegeben, wobei der Werkstoff nach dem Abgeben in einen Ruheprozess, beispielsweise einen Erstarrungsprozess oder Aushärtungsprozess, eintritt. Durch den Ruheprozess wird aus dem abgegebenen Werkstoff die erste Materialschicht auf dem Substrat gebildet. Ebenso wird durch den Ruheprozess der ersten Materialschicht gewährleistet, dass diese zu einem Verbinden mit einer weiteren Materialschicht geeignet ist. In einem weiteren Schritt erfolgt ein Erzeugen einer zweiten Materialschicht auf der ersten Materialschicht. Infolge des Ruheprozesses ist die erste Materialschicht hinreichend tragfähig um zumindest das Eigengewicht der zweiten Materialschicht maßhaltig, also ohne Verrutschen, Zerfließen, etc. zu tragen. Die zweite Materialschicht wird dabei von einer zweiten beweglichen Abgabevorrichtung ausgebildet, die dazu ausgebildet ist, einen Werkstoff abzugeben. Auch der von der zweiten beweglichen Abgabevorrichtung abgegebene Werkstoff tritt nach der Abgabe in einen Ruheprozess ein, durch den die zweite Materialschicht gebildet wird. Die zweite Materialschicht verbindet sich dabei mit der ersten Materialschicht.

Erfindungsgemäß erfolgen das Erzeugen der ersten Materialschicht und das Erzeugen der zweiten Materialschicht zumindest teilweise gleichzeitig. Das Erzeugen der zweiten Materialschicht setzt also dann ein, während die erste Materialschicht selbst noch hergestellt wird, auf der die zweite Materialschicht anzubringen ist. Der Erfindung liegt unter anderem die Erkenntnis zugrunde, dass Werkstoffe, die zur additiven Fertigung geeignet sind, bereits nach einem verhältnismäßig kurzen Ruheprozess dazu geeignet sind, darauf eine weitere Materialschicht anzubringen. Infolgedessen nutzt das erfindungsgemäße Herstellungsverfahren die Eigenschaften des eingesetzten Werkstoffs aus, um so das Erzeugen der zweiten Materialschicht auf der ersten Materialschicht mit einer minimierten Verzögerung einzuleiten. Dadurch werden die erste und zweite Materialschicht nahezu gleichzeitig hergestellt, was in einer insgesamt erhöhten Fertigungsgeschwindigkeit resultiert. Des Weiteren ist das erfindungsgemäße Herstellungsverfahren in einfacher und kosteneffizienter Weise durchführbar.

In einer Ausführungsform des beanspruchten Herstellungsverfahrens kann die zweite bewegliche Abgabevorrichtung einer Bahn der ersten beweglichen Abgabevorrichtung folgen. Während die erste und zweite Materialschicht gleichzeitig erzeugt werden, verfolgt die zweite bewegliche Abgabevorrichtung die erste bewegliche Abgabevorrichtung. Dadurch wird eine präzise Positionierung der zweiten Materialschicht auf der ersten Materialschicht gewährleistet, und so die Maßhaltigkeit des herzustellenden Bauteils erhöht. Dabei wird die Ansteuerung der beweglichen Abgabevorrichtungen auf jeweils eine Bahnsteuerung der beweglichen Abgabevorrichtungen und jeweils ein Aktivieren bzw. Deaktivieren einer Werkstoffabgabe reduzierbar. Dabei ist eine Vorgabe für eine Bahnsteuerung der ersten beweglichen Abgabevorrichtung auch für eine Bahnsteuerung der zweiten beweglichen Abgabevorrichtung einsetzbar. Die Verwendung komplexer Algorithmen zur Einteilung eines 3D-Druck-Vorgangs in mehrere Einzelaufgaben für separate Druckköpfe, die zwingend eine Kollisionsfreiheit der Druckköpfe erfordert, ist somit entbehrlich. Infolgedessen ist das beanspruchte Verfahren auch auf einfacher Hardware mit geringer Rechenleistung schnell und zuverlässig durchführbar. Zwischen der ersten und zweiten Abgabevorrichtung können auch weitere Abgabevorrichtungen angebracht sein, die durch ein Abgeben eines weiteren Werkstoffs oder Hilfsstoffs das Erzeugen der ersten Materialschicht unterstützen. Beispielsweise kann bei einem Binder-Jetting-Verfahren mit der ersten Abgabevorrichtung ein Pulver abgegeben werden, und mit einer weiteren Abgabevorrichtung, die zwischen der ersten und zweiten Abgabevorrichtung angebracht ist, der dazu ein Binder-Jetting-Klebstoff abgegeben werden um so das Erzeugen der ersten Materialschicht zu unterstützen.

Ferner können beim beanspruchten Herstellungsverfahrens zumindest die erste und zweite Abgabevorrichtung mit einer Führungsvorrichtung verbunden sein, um die sie während des Herstellungsverfahrens umlaufen. Die erste und zweite bewegliche Abgabevorrichtung werden somit im Laufe des Herstellungsverfahrens wiederholt verwendet. Beim Umlaufen um die Führungsvorrichtung kann die zweite bewegliche Abgabevorrichtung einer Bahn der ersten beweglichen Abgabevorrichtung folgen. Dadurch wird die Bahnsteuerung der ersten beweglichen Abgabevorrichtung weiter vereinfacht. Diese erfordert bei einem Umlauf lediglich ein Vorgeben einer Bahngeschwindigkeit der beweglichen Abgabevorrichtungen und einer Umlaufrichtung. Dadurch werden die Vorteile einer einfachen Ansteuerung der beweglichen Abgabevorrichtung weiter gesteigert. Darüber hinaus erlaubt ein Umlauf eine im Wesentlichen kontinuierliche Bewegung der beweglichen Abgabevorrichtungen. Abrupte Brems- oder Wendemanöver, die eine hohe Beanspruchung für Komponenten der beweglichen Abgabevorrichtungen hervorrufen, werden durch das beanspruchte Verfahren minimiert. Folglich ist das beanspruchte Herstellungsverfahren auch auf einfachen Fertigungsvorrichtungen durchführbar. Insbesondere ist bei diesen die Verwendung kostenintensiver hochbelastbarer Lager entbehrlich. Des Weiteren werden am herzustellenden Bauteil Unstetigkeiten vermieden, die bei bekannten Lösungen durch Wendemanöver von Druckköpfen entstehen können.

In einer weiteren Ausführungsform des beanspruchten Herstellungsverfahrens liegt dann, wenn parallel, also gleichzeitig, die erste und zweite Materialschicht erzeugt werden, zwischen der ersten und zweiten beweglichen Abgabevorrichtung eine Laufdistanzdauer vor. Die Laufdistanzdauer entspricht einer Distanz zwischen der ersten und zweiten beweglichen Abgabevorrichtung während des Erzeugens der ersten und zweiten Materialschicht. Somit ist die Laufdistanzdauer der zeitliche Abstand, in dem die erste und zweite bewegliche Abgabevorrichtung hierbei eine Referenzlinie überqueren. Die Laufzeitdistanz entspricht im Wesentlichen zumindest einer Mindestruhedauer des Werkstoffs, aus dem die erste Materialschicht hergestellt ist. Unter der Mindestruhedauer ist die Dauer zu verstehen, in der ein Erstarrungsprozess, ein Aushärtungsprozess oder ähnliches der ersten Materialschicht soweit fortgeschritten ist, dass ein Verbinden mit der zweiten Materialschicht möglich ist. Je geringer eine Differenz zwischen der Laufdistanzdauer und der Mindestruhedauer der ersten Materialschicht gewählt ist, umso schneller wird das Erzeugen der zweiten Materialschicht eingeleitet. Das Herstellungsverfahren wird somit im Wesentlichen durch die Eigenschaften des eingesetzten Werkstoffs dimensioniert und nicht zwangsläufig von Konstruktionsrandbedingungen einer eingesetzten Fertigungsvorrichtung.

Die Laufdistanzdauer kann dabei unveränderlich ausgebildet sein. Dazu weisen die erste und zweite bewegliche Abgabevorrichtung einen feststehenden Abstand zueinander auf. Alternativ kann die Laufdistanzdauer auch veränderlich ausgebildet sein. Hierzu können die erste und zweite bewegliche Abgabevorrichtung beispielsweise mit Schlitten verbunden sein, und die Führungsvorrichtung im Wesentlichen als Linearmotor. Dadurch sind die beweglichen Abgabevorrichtungen separat ansteuerbar, so dass beispielsweise bei einem Umlauf eine Rücklaufbewegung einer beweglichen Abgabevorrichtung beschleunigt werden kann.

In einer weiteren Ausführungsform des beanspruchten Herstellungsverfahrens kann der Ruheprozess, den die erste Materialschicht bis zum Aufbringen der zweiten Materialschicht durchläuft, durch eine einstellbare Zufuhr von Wärme beeinflusst werden, insbesondere beschleunigt werden. Die Zufuhr von Wärme erfolgt dabei beispielsweise durch ein Heizelement, das an zumindest einer der beweglichen Abgabevorrichtungen angebracht ist. Insgesamt kann so eine Erstarrungszeit zumindest der ersten und/oder zweiten Materialschicht, also deren Mindestruhedauer, eingestellt werden. Ferner kann eine Schichtdicke zumindest der ersten und/oder zweiten Materialschicht durch ein vertikales Bewegen zumindest der ersten und/oder zweiten beweglichen Abgabevorrichtung eingestellt werden. Gleichermaßen kann auch eine Eigenschaft des eingesetzten Werkstoffs, beispielsweise dessen Temperatur, Austrittgeschwindigkeit und/oder Austrittsquerschnitt einstellbar sein. Insbesondere ist kann die Länge und Breite einstellbar sein, mit der die erste und/oder zweite Materialschicht erzeugt werden. Das Einstellen dieser Prozessparameter kann dabei durch eine Benutzereingabe, einen Algorithmus und/oder eine Wertetabelle erfolgen.

Darüber hinaus können die erste und zweite bewegliche Abgabevorrichtung zwischen einem Arbeitsbereich und einem Rücklaufbereich umlaufen. Unter dem Arbeitsbereich ist bei einem Umlauf der Abschnitt zu verstehen, in dem eine bewegliche Abgabevorrichtung zum Abgeben des Werkstoffs aktivierbar ist. Der Rücklaufbereich ist korrespondierend zum Arbeitsbereich der Abschnitt eines Umlaufs, in dem eine Aktivierung einer Werkstoffabgabe nicht möglich oder zumindest unproduktiv ist. Ein Durchfahren des Rücklaufbereichs erlaubt es einer beweglichen Abgabevorrichtung beispielsweise abzukühlen, eine Selbstdiagnose und/oder eine Reinigung durchzuführen. Dementsprechend ist zumindest eine der beweglichen Abgabevorrichtungen dazu ausgebildet, eine Selbstdiagnose durchzuführen. Alternativ oder ergänzend kann auch ein Befüllen der beweglichen Abgabevorrichtung mit Werkstoff erfolgen. Folglich können beim beanspruchten Herstellungsverfahren Defekte infolge von Überbeanspruchung der beweglichen Abgabevorrichtungen früh erkannt und vermieden werden. Die so gewonnene Rücklaufphase zum Abkühlen und/oder zur Selbstdiagnose ist in den Ablauf des Herstellungsverfahrens eingebettet und erfordert keine zusätzliche Prozessdauer. Hierdurch wird die Zuverlässigkeit des beanspruchten Verfahrens gesteigert und gleichzeitig ein hohes Maß an Produktivität beibehalten.

Ferner kann die zweite bewegliche Abgabevorrichtung beim beanspruchten Herstellungsverfahren eine höhere Distanz zum Substrat aufweisen als die erste bewegliche Abgabevorrichtung. Zumindest die erste und/oder zweite Abgabevorrichtung sind dazu in einer Auftragsrichtung beweglich ausgebildet. Während des beanspruchten Herstellungsverfahrens wird die Distanz zumindest der ersten und/oder zweiten beweglichen Abgabevorrichtung angepasst, um so das Erzeugen der jeweiligen Materialschicht zu ermöglichen. Ferner ist dadurch eine Schichtdicke zumindest der ersten und/oder zweiten Materialschicht einstellbar.

In einer weiteren Ausführungsform des beanspruchten Herstellungsverfahrens können zumindest die erste und zweite bewegliche Abgabevorrichtung in nur einer Umlaufrichtung umlaufen. Eine gleichbleibende Umlaufrichtung führt dazu, dass abrupte Verzögerungen während des Erzeugens der Materialschichten vermieden werden und dadurch die mechanische Beanspruchung der beweglichen Abgabevorrichtungen reduziert wird. Ferner erlaubt eine gleichbleibende Umlaufrichtung es, die Bahnsteuerung der beweglichen Abgabevorrichtungen weiter zu vereinfachen, da weitere Angaben über die Umlaufrichtung entbehrlich sind.

Des Weiteren kann im beanspruchten Herstellungsverfahren in einem weiteren Schritt ein Aufbringen einer dritten Materialschicht mittels einer dritten beweglichen Abgabevorrichtung erfolgen. Die dritte Materialschicht wird hierbei auf die zweite Materialschicht aufgebracht und zumindest teilweise gleichzeitig mit der ersten und zweiten Materialschicht erzeugt. Infolgedessen ist eine erhöhte Anzahl an Materialschichten gleichzeitig fertigbar. Insbesondere können umso mehr bewegliche Abgabevorrichtungen zum Erzeugen von Materialschichten gleichzeitig eingesetzt werden, je länger das zu fertigende Bauteil entlang der Bahn der Abgabevorrichtungen ist. Folglich erlaubt es das beanspruchte Herstellungsverfahren, umso schneller zu fertigen, je größer das herzustellende Bauteil entlang einer Richtung, also der Richtung der Bahn der beweglichen Abgabevorrichtungen, ist. Das Herstellungsverfahren ist deshalb in vorteilhafter Weise skalierbar und bietet ein hohes Maß an Wirtschaftlichkeit. Ferner kann die erzielbare Fertigungsgeschwindigkeit dadurch eingestellt werden, dass eine Länge und/oder Breite eingestellt wird, auf der die erste und/oder zweite Materialschicht erzeugt wird.

Ferner kann im beanspruchten Herstellungsverfahren als Schmelzschichtungsverfahren, als Multi-Binder-Jet-Modelling-Verfahren, als Laminated-Object-Manufacturing-Verfahren, oder als Kaltgasspritzverfahren ausgebildet sein. Die beanspruchte Lösung ist damit auf eine Vielzahl an Fertigungstechniken übertragbar und weist ein breites Einsatzspektrum auf. Durch das beanspruchte Verfahren werden die skizzierten Fertigungstechniken in puncto Fertigungsgeschwindigkeit verbessert. Ferner wird durch die reduzierten mechanischen Beanspruchungen bei der Bewegung der Abgabevorrichtungen in den entsprechenden Fertigungsvorrichtungen deren Verschleiß reduziert. Darüber hinaus erlaubt die beanspruchte Lösung es, entsprechende Fertigungsvorrichtungen einfacher und kosteneffizienter auszuführen.

Die zugrundeliegende Aufgabenstellung wird auch durch die erfindungsgemäße Fertigungsvorrichtung gelöst. Die erfindungsgemäße Fertigungsvorrichtung ist dazu geeignet, zumindest eine Ausführungsform des oben skizzierten Herstellungsverfahrens umzusetzen. Die beschriebenen Merkmale des Herstellungsverfahrens sind deshalb auf die erfindungsgemäße Fertigungsvorrichtung übertragbar. Die erfindungsgemäße Fertigungsvorrichtung umfasst einen Fertigungstisch und eine Mehrzahl an beweglichen Abgabevorrichtungen, die dazu ausgebildet sind, einen Werkstoff abzugeben, mittels dessen Materialschichten eines herzustellenden Bauteils erzeugbar sind. Die Abgabevorrichtungen können beispielsweise als Druckkopf zum Abgeben eines Kunststoffmaterials oder eine Düse zum Abgeben eines Binder-Jetting-Materials oder eine Kaltgasdüse sein. Die Fertigungsvorrichtung umfasst zumindest eine erste und eine zweite bewegliche Abgabevorrichtung, die an einer Führungsvorrichtung angebracht sind, durch die im bestimmungsgemäßen Betrieb eine Bahn zumindest der ersten und zweiten Abgabevorrichtung vorgebbar ist. Erfindungsgemäß sind zumindest die erste und zweite bewegliche Abgabevorrichtung zu einem Umlauf um die Führungsvorrichtung ausgebildet. Die erste und zweite bewegliche Abgabevorrichtung passieren somit im laufenden Betrieb periodisch das herzustellende Bauteil in gleicher Richtung, wobei durch ein Aktivieren der beweglichen Abgabevorrichtung Materialschichten des herzustellenden Bauteils erzeugt werden. Dabei wird je eine Materialschicht von einer beweglichen Abgabevorrichtung erzeugt. Unmittelbar aneinander anliegende Materialschichten werden insbesondere von benachbart angeordneten beweglichen Abgabevorrichtungen erzeugt. Dies erlaubt es, im Betrieb der Fertigungsvorrichtung eine Mehrzahl an beweglichen Abgabevorrichtungen gleichzeitig einzusetzen und so die Fertigungsgeschwindigkeit zu steigern. Die Anordnung der zumindest ersten und zweiten beweglichen Abgabevorrichtungen in einem Umlauf bietet eine inhärente Kollisionsfreiheit der beweglichen Abgabevorrichtungen untereinander und ist ein einfacher Weise steuerbar. Insbesondere ist die Ansteuerung der beweglichen Abgabevorrichtungen auf deren Umlaufrichtung, ihre jeweilige Bahngeschwindigkeit und deren jeweilige die Aktivierung bzw. Deaktivierung, also Abgabe von Werkstoff, reduzierbar. Die erfindungsgemäße Fertigungsvorrichtung ist damit in einfacher Weise programmierbar und steuerbar, was die Verwendung einfacher Hardware mit geringer Rechenleistung erlaubt. Ferner wird durch die Anordnung der beweglichen Abgabevorrichtungen in einem Umlauf gewährleistet, dass abrupte Brems- oder Wendemanöver der beweglichen Abgabevorrichtungen minimiert werden. Derartige Brems- und Wendemanöver stellen eine hohe mechanische Beanspruchung dar, die beispielsweise hochbelastbare Präzisionslager erfordert. Diese sind in der erfindungsgemäßen Fertigungsvorrichtung entbehrlich. Die beanspruchte Fertigungsvorrichtung bietet damit insgesamt ein hohes Maß an Fertigungsgeschwindigkeit, Zuverlässigkeit und Wirtschaftlichkeit.

In einer Ausführungsform der beanspruchten Fertigungsvorrichtung sind die beweglichen Abgabevorrichtungen in einer Förderband-Anordnung oder in einer Karussell-Anordnung angebracht. Bei einer Förderband-Anordnung sind die beweglichen Abgabevorrichtungen bei einem Rücklauf gegenüber dem Fertigungstisch durch Umlenkrollen angehoben. Bei einer Karussell-Anordnung werden die beweglichen Abgabevorrichtungen im Wesentlichen parallel zu einer Ebene des Fertigungstischs geführt. Förderband-Anordnungen sind in einer Querrichtung zu einer Bahn der beweglichen Abgabevorrichtungen platzsparend. Dadurch können an einer Fertigungsvorrichtung in einfacher Weise mehrere Förderband-Anordnungen von beweglichen Abgabevorrichtungen angeordnet sein, was eine weitere Steigerung der Fertigungsgeschwindigkeit erlaubt. Ein Karussell-Anordnung ermöglicht eine einfache und präzise Ausrichtung der beweglichen Abgabevorrichtungen. Die Karussell-Anordnung kann dabei als Schiene ausgebildet sein, die ein hohes Maß an Präzision bei der Führung der beweglichen Abgabevorrichtungen bietet. Die beweglichen Abgabevorrichtungen können dabei hängend oder an einer Laufkatze an der Schiene angebracht sein. In vorteilhafter Weise kann eine Karussell-Anordnung als Linearmotor ausgebildet sein, bei dem die beweglichen Abgabevorrichtungen an Schlitten befestigt sind, die sich auf dem Linearmotor bewegen. Dadurch sind die beweglichen Abgabevorrichtungen separat mit unterschiedlichen Bahngeschwindigkeiten beweglich. Der Fertigungstisch kann ferner vertikal beweglich ausgebildet sein, um im Zusammenspiel mit einer vertikalen Positionierung der beweglichen Abgabevorrichtungen eine Schichtdicke der Materialschichten einzustellen. Zusätzlich kann der Fertigungstisch an seinen Enden mit vertikal beweglichen Schleusen ausgestattet sein, um ein Herausfallen von bereits eingebrachtem Werkstoff zu verhindern.

In einer weiteren Ausführungsform der beanspruchten Fertigungsvorrichtung sind die erste und zweite bewegliche Abgabevorrichtung auf einem Gurt angeordnet, der zumindest zwei Umlenkrollen umschlingt und dazu ausgebildet ist, die Führungsvorrichtung zu umlaufen. Die auf dem Gurt angebrachte erste und zweite bewegliche Abgabevorrichtung weisen zueinander eine feste Umlaufdistanz auf, was wiederum eine feste Laufdistanzdauer bedeutet. Dadurch ist die Position der zweiten beweglichen Abgabevorrichtung in Abhängigkeit von der Position der ersten beweglichen Abgabevorrichtung und deren Bahngeschwindigkeit bestimmbar. Dies erlaubt wiederum eine einfache Ansteuerung der beweglichen Abgabevorrichtungen, die mit geringem Rechenaufwand implementierbar ist.

Darüber hinaus können zumindest die erste und zweite bewegliche Abgabevorrichtung jeweils auf einem Schlitten angeordnet sein, der zu einem Umlauf um die Führungsvorrichtung ausgebildet ist. Die einzelnen Schlitten sind jeweils unabhängig voneinander beweglich ausgebildet, so dass deren Bahngeschwindigkeit separat einstellbar ist. Folglich sind die Umlaufdistanzen zwischen der ersten und zweiten Abgabevorrichtung im bestimmungsgemäßen Betrieb der Fertigungsvorrichtung veränderbar. Beispielsweise kann die erste bewegliche Abgabevorrichtung nach einem Durchlaufen des Arbeitsbereichs mit einer erhöhten Bahngeschwindigkeit durch den Rücklaufbereich bewegt werden. Dadurch ist die Anzahl an inaktiven, also nicht werkstoffabgebenden, Abgabevorrichtungen im bestimmungsgemäßen Betrieb reduzierbar. Die beanspruchte Fertigungsvorrichtung erzielt damit eine erhöhte Fertigungsgeschwindigkeit mit einem Minimum an dafür notwendigen Abgabevorrichtungen und ist somit einfach und kosteneffizient.

Die zugrundeliegende Aufgabenstellung wird auch durch das erfindungsgemäße Computerprogrammprodukt gelöst. Das Computerprogrammprodukt ist dazu ausgebildet, Steuerbefehle zu erzeugen und damit zumindest eine Bahngeschwindigkeit einer beweglichen Abgabevorrichtung einzustellen, die einen Umlauf um eine Führungsvorrichtung vollführt. Das Computerprogrammprodukt ist auch dazu ausgebildet, durch einen Steuerbefehl zumindest eine bewegliche Abgabevorrichtung zu betätigen, also eine Abgabe von Werkstoff zu aktivieren oder zu deaktivieren. Das Computerprogrammprodukt in einer Steuereinheit einer Fertigungsvorrichtung für additive Fertigung ausführbar ausgebildet. Dazu kann das Computerprogrammprodukt ganz oder teilweise als Software ausgebildet sein, die auf einem nichtflüchtigen Datenträger gespeichert ist. Das Computerprogrammprodukt kann auch als integrierte Schaltung, auch ASIC genannt, als Mehrzahl von FPGAs, oder als Chip festverdrahtet ausgebildet sein. Ferner kann das Computerprogrammprodukt auch kombiniert teilweise festverdrahtet und teilweise als Software ausgebildet sein. Erfindungsgemäß ist das Computerprogrammprodukt derart ausgebildet, zumindest eine der oben skizzierten Ausführungsformen des beschriebenen Herstellungsverfahrens umzusetzen.

Gleichermaßen wird die skizzierte Aufgabenstellung durch die erfindungsgemäße Steuereinheit gelöst. Die Steuereinheit umfasst ein Rechenwerk, einen Speicher und einer Schnittstelle, die zu einem Ausgeben von Steuerbefehlen ausgebildet ist. Die Steuerbefehle sind beispielsweise mittels eines Computerprogrammprodukts, das in ausführbarer Form in der Steuereinheit gespeichert ist. Die Steuereinheit ist mit einer Fertigungsvorrichtung für eine additive Fertigung koppelbar und dazu ausgebildet, die Steuerbefehle an bewegliche Abgabevorrichtungen der Fertigungsvorrichtung auszugeben. Die Steuereinheit kann dabei in die Fertigungsvorrichtung integriert sein oder als externe Steuereinheit ausgebildet sein, die beispielsweise zu einem Leitrechner, einer Speicherprogrammierbaren Steuerung, oder einer Computer-Cloud gehört. Die Steuereinheit ist erfindungsgemäß dazu ausgebildet, zumindest eine der oben beschriebenen Ausführungsformen des beanspruchten Herstellungsverfahrens auf der Fertigungsvorrichtung, die mit der Steuereinheit gekoppelt ist, durchzuführen. Hierzu kann die Steuereinheit beispielsweise mit einem oben beschriebenen Computerprogrammprodukt ausgestattet sein.

Die zugrundeliegende Aufgabenstellung wird auch durch ein Bauteil gelöst, das beispielsweise als Maschinenkomponente, insbesondere als Getriebekomponente, einsetzbar ist. Das erfindungsgemäße Bauteil ist durch additive Fertigung gemäß einem der oben skizzierten Herstellungsverfahren hergestellt. Alternativ oder ergänzend kann das Bauteil auch mittels einer Ausführungsform der oben beschriebenen Fertigungsvorrichtung hergestellt sein.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigen im Einzelnen:
- FIG 1: eine schematische Ansicht einer ersten Ausführungsform des beanspruchten Herstellungsverfahrens;
- FIG 2: eine schematische Seitenansicht einer ersten Ausführungsform der beanspruchten Fertigungsvorrichtung;
- FIG 3: eine schematische Draufsicht einer zweiten Ausführungsform der beanspruchten Fertigungsvorrichtung;
- FIG 4: einen schematischen Ablauf einer zweiten Ausführungsform des beanspruchten Herstellungsverfahrens.

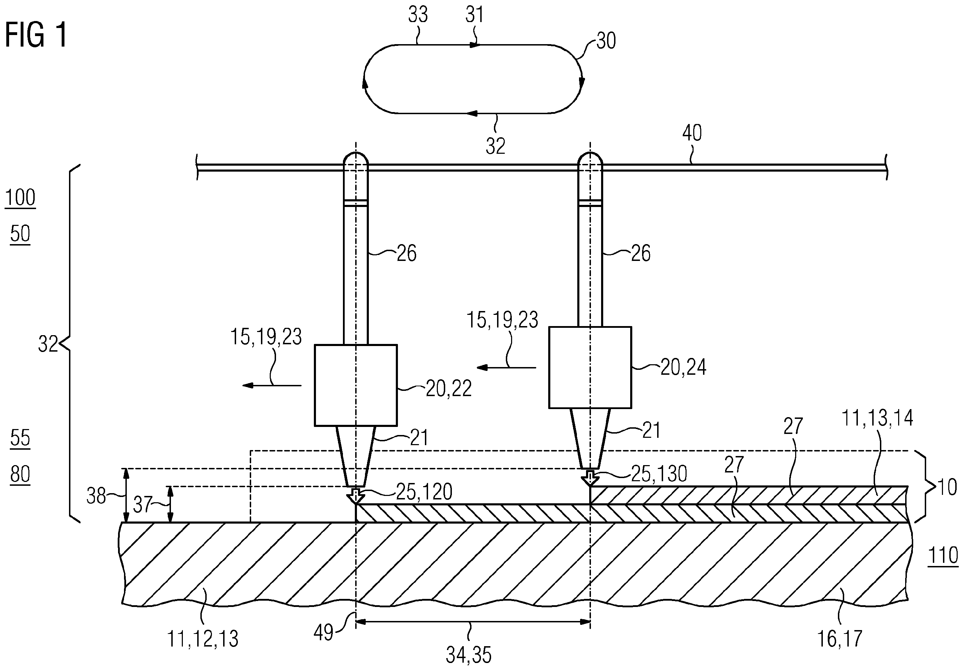

FIG 1 zeigt schematisch eine erste Ausführungsform des beanspruchten Herstellungsverfahrens 100, das mittels einer Fertigungsvorrichtung 50 durchgeführt wird. Das beanspruchte Herstellungsverfahren 100 ist dabei als eine Verfahren zur additiven Fertigung ausgebildet. Die Fertigungsvorrichtung 50 weist einen Fertigungstisch 17 auf, dem ein Bauteil 10 herzustellen ist, das eine Mehrzahl an Materialschichten 11 umfasst. Der Fertigungstisch 17 dient als Substrat 16, also als Grundlage, auf dem das Bauteil 10 herzustellen ist. Der Fertigungstisch 17 wird in einem ersten Schritt 110, der in FIG 1 bereits abgeschlossen ist, im Rahmen des Herstellungsverfahrens 100 bereitgestellt. Die Fertigungsvorrichtung 50 weist eine Mehrzahl an beweglichen Abgabevorrichtungen 20 auf, die zu einer Abgabe eines Werkstoffs 25 ausgebildet sind, aus denen die Materialschichten 11 gebildet werden. Die Abgabe des Werkstoffs 25 erfolgt dabei durch Düsen 21, die den beweglichen Abgabevorrichtungen 20 zugeordnet sind.

Durch eine erste bewegliche Abgabevorrichtung 22 wird in einen zweiten Schritt 120 eine erste Materialschicht 12 erzeugt, indem der Werkstoff 25 auf das Substrat 16, also den Fertigungstisch 17, abgibt und dabei eine Bahn 15 mit einer Bahngeschwindigkeit 19 entlangfährt. Die Bahngeschwindigkeit 19 ist bei der ersten beweglichen Abgabevorrichtung 22 auf eine Arbeitsgeschwindigkeit 23 eingestellt, bei der die Materialschichten 11 bestimmungsgemäß gebildet werden. Entlang der Bahn 15 beabstandet zur ersten beweglichen Abgabevorrichtung 22 ist eine zweite bewegliche Abgabevorrichtung 24 angeordnet, die wie die erste bewegliche Abgabevorrichtung 22 zum Abgeben eines Werkstoffs 25 ausgebildet ist. Mittels der zweiten beweglichen Abgabevorrichtung 24 wird auch mit einer Bahngeschwindigkeit 19 entlang einer Bahn 15 geführt, wobei die Bahngeschwindigkeit 19 einer Arbeitsgeschwindigkeit 23 entspricht, bei der die zweite Materialschicht 14 erzeugt wird. Die zweite Materialschicht 14 wird in einem dritten Schritt 130 erzeugt und unmittelbar auf der ersten Materialschicht 12 angebracht. Die erste und zweite bewegliche Abgabevorrichtung 22, 24 sind jeweils mittels einer Halterung 26 an einer Führungsvorrichtung 40 angeordnet und vollführen während des Herstellungsverfahrens 100 einen Umlauf 30, der mit seiner Umlaufrichtung 31 in FIG 1 nur schematisch abgebildet ist. Während des Umlaufs 30 durchlaufen die beweglichen Abgabevorrichtungen einen Arbeitsbereich 32, in dem Materialschichten 11 erzeugbar sind, und einen nicht näher dargestellten Rücklaufbereich 33.

Der im ersten Schritt 110 auf das Substrat 16 aufgebrachte Werkstoff 25 erstarrt nach der Abgabe zumindest teilweise. Unter einem Erstarren ist dabei in Abhängigkeit vom eingesetzten Werkstoff 25 auch ein Verkleben, teilweises Aushärten oder ähnliches zu verstehen. Nach einer Mindestruhedauer liegt in der ersten Materialschicht 12 ein erstarrter Werkstoff 27 vor, der dazu geeignet ist, zumindest die zweite Materialschicht 14 maßhaltig zu tragen. Darunter ist zu verstehen, dass die erste Materialschicht 12 durch das Eigengewicht der zweiten Materialschicht 14 oder auch weiterer Materialschichten 11 höchstens in einem für das herzustellende Bauteil 10 hinnehmbar verformt wird. Die erste und zweite bewegliche Abgabevorrichtung 22, 24 weisen zueinander eine Umlaufdistanz 34 auf, die durch die Anordnung an der Führungsvorrichtung 40 unveränderlich vorgegeben ist. Infolgedessen entspricht die Umlaufdistanz 34 auch einer Laufdistanzdauer 35 entspricht. Die Laufdistanzdauer 35 ist die Dauer die zwischen dem Passieren einer Referenzlinie 49 durch die erste und zweite bewegliche Abgabevorrichtung 22, 24 vergeht. Die Laufdistanzdauer 35 entspricht zumindest der Mindestruhedauer des Werkstoffs 25. Beim Erzeugen der zweiten Materialschicht 14 liegt die erste Materialschicht 12 im Bereich der zweiten beweglichen Abgabevorrichtung 24 als zumindest erstarrter Werkstoff 27 vor. Infolgedessen werden die erste Materialschicht 12 und die zweite Materialschicht 14 zumindest teilweise gleichzeitig hergestellt.

Die erste und zweite Materialschicht 12, 14 weisen jeweils eine Schichtdicke 13 auf, die durch eine jeweilige Distanz 37 38 der ersten bzw. zweiten beweglichen Abgabevorrichtung 22, 24 gegenüber dem Substrat 16, in FIG 1 also dem Fertigungstisch 17, bestimmt ist. Zumindest die erste und zweite Abgabevorrichtung 22, 24 sind entlang einer Richtung senkrecht zum Substrat 16 einstellbar beweglich. Eine Ansteuerung der beweglichen Abgabevorrichtungen 12, 14 erfolgt mittels einer nicht näher dargestellten Steuereinheit 55, die mit einem Computerprogrammprodukt 80 ausgestattet ist, das zu einer Durchführung des Herstellungsverfahrens 100 ausgebildet ist. Die Ansteuerung der beweglichen Abgabevorrichtungen 20, 22, 24 umfasst auch ein Einstellen der Bahngeschwindigkeit 19, mit der der Umlauf 30 erfolgt, und eine Aktivierung bzw. Deaktivierung um die Abgabe von Werkstoff 25 einzuleiten bzw. zu stoppen.

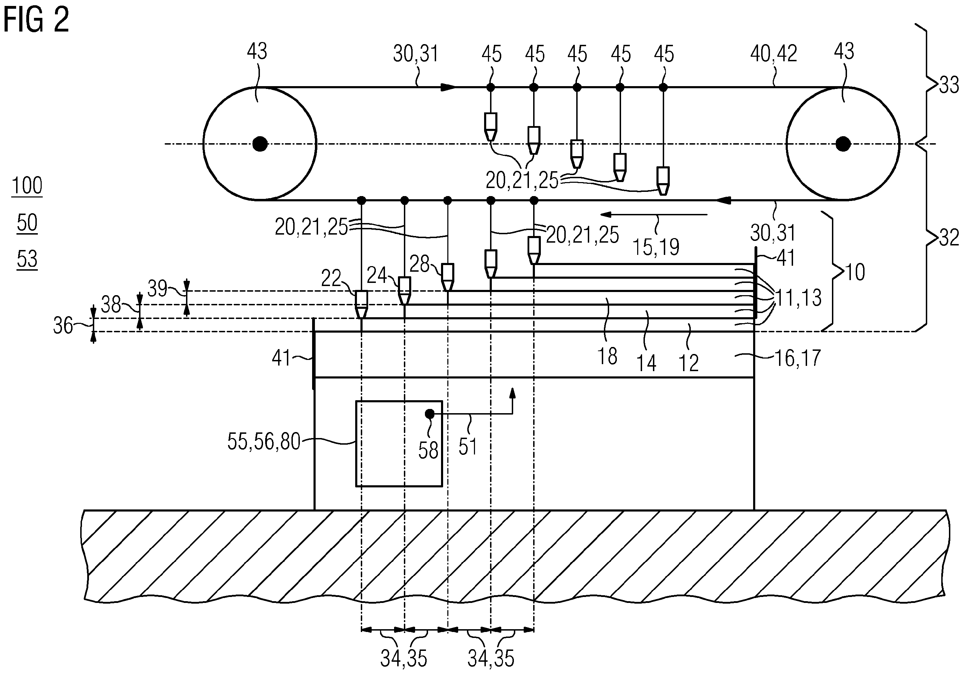

In FIG 2 ist schematisch eine erste Ausführungsform der beanspruchten Fertigungsvorrichtung 50 in einer Seitenansicht dargestellt, mit der das beanspruchte Herstellungsverfahren 100 durchführbar ist. Die Fertigungsvorrichtung 50 weist einen Fertigungstisch 17 auf, der als Substrat 16 dient, auf dem ein Bauteil 10 additiv herzustellen ist. Das Substrat 16 wird im beanspruchten Verfahren 100 in einem ersten Schritt 110 bereitgestellt. Der Fertigungstisch 17 ist an seinen Enden mit vertikal beweglichen Schleusen 41 ausgestattet, durch die ein Herausfallen von Werkstoff 25 verhindert wird. Das herzustellende Bauteil 10 umfasst eine Mehrzahl von Materialschichten 11, die jeweils eine Schichtdicke 13 aufweisen und unmittelbar aufeinanderliegen. Die Fertigungsvorrichtung 50 umfasst auch eine Mehrzahl an beweglichen Abgabevorrichtungen 20, die jeweils über eine Halterung 26 an Aufhängungspunkten 45 mit einer Führungsvorrichtung 40 verbunden sind. Die beweglichen Abgabevorrichtungen 20 sind dazu ausgebildet, über eine Düse 21 einen Werkstoff 25 abzugeben, um so die Materialschichten 11 zu erzeugen. Mittels einer ersten beweglichen Abgabevorrichtung 22 wird in einem zweiten Schritt 120 eine erste Materialschicht 12 erzeugt. Auf der ersten Materialschicht 12 wird wiederum mittels einer zweiten beweglichen Abgabevorrichtung 24 in einem dritten Schritt 130 eine zweite Materialschicht 14 erzeugt. Analog wird in einem vierten Schritt 140 mittels einer dritten beweglichen Abgabevorrichtung 28 eine dritte Materialschicht 18 auf der zweiten Materialschicht 14 erzeugt. Dabei sind die beweglichen Abgabevorrichtungen 20, 22, 24, 28 jeweils gemäß der Schichtdicke 13 der entsprechenden Materialschicht 11 in einer unterschiedlichen Distanz 36, 38, 39 positioniert. Ferner folgen die beweglichen Abgabevorrichtungen 20 jeweils einer gemeinsamen Bahn 15 mit einer gemeinsamen Bahngeschwindigkeit 19. Die beweglichen Abgabevorrichtungen 20 sind an einem Gurt 42 der Führungsvorrichtung 40 angebracht und weisen jeweils zueinander eine feste Umlaufdistanz 34 zueinander auf. Die Umlaufdistanz 34 korrespondiert dabei mit einer Laufdistanzdauer 35, die zumindest einer Mindestruhedauer des eingesetzten Werkstoffs 25 entspricht. Nach Ablauf der Mindestruhedauer liegt der abgegebene Werkstoff 25 als zumindest teilweise erstarrter Werkstoff 27 vor, der zu einem Verbinden mit den darüberliegenden Materialschichten 11 geeignet ist.

Neben dem Gurt 42 umfasst die Führungsvorrichtung 40 auch zumindest zwei Umlenkrollen 43, die vom Gurt 42 umschlungen werden. Dadurch wird eine Förderband-Anordnung 53 ausgebildet an der Fertigungsvorrichtung 50 ausgebildet. Auf einer dem herzustellenden Bauteil 10 zugewandten Seite der Führungsvorrichtung 40 befindet sich ein Arbeitsbereich 32, in dem eine Abgabe von Werkstoff 25 zum Erzeugen von Materialschichten 11 erfolgen kann. Auf einer dem herzustellenden Bauteil 10 abgewandten Seite der Führungsvorrichtung 40 ist ein Rücklaufbereich 33 ausgebildet, in dem die dort befindlichen beweglichen Abgabevorrichtungen 20 bei einem Umlauf 30 abkühlen. Der Umlauf 30 erfolgt gemäß der Ausführungsform in FIG 2 in einer einzigen Umlaufrichtung 31, so dass eine Ansteuerung der einzelnen beweglichen Abgabevorrichtungen 20 auf ein Einstellen einer Bahngeschwindigkeit 19 und einem Aktivieren bzw. Deaktivieren der beweglichen Abgabevorrichtungen 20 zur Abgabe von Werkstoff 25 reduzierbar ist. Entsprechende Steuerbefehle 51 sind über eine Schnittstelle 58 einer Steuereinheit 55 an die beweglichen Abgabevorrichtungen 20 und/oder die Führungsvorrichtung 40 ausgebbar. Ebenso sind Steuerbefehle 51 zu einem Einstellen der Distanzen 36, 38, 39 zwischen den einzelnen beweglichen Abgabevorrichtungen 20 und dem Substrat 16, also in FIG 2 dem Fertigungstisch 17, ausgebbar. Die Steuereinheit 55 ist hierzu mit einem Computerprogrammprodukt 80 ausgestattet, das dazu ausgebildet ist, das Herstellungsverfahren 100 umzusetzen. Die Steuereinheit 55 ist ferner als interne Steuereinheit 56 ausgebildet, die fest mit der Fertigungsvorrichtung 50 gekoppelt ist.

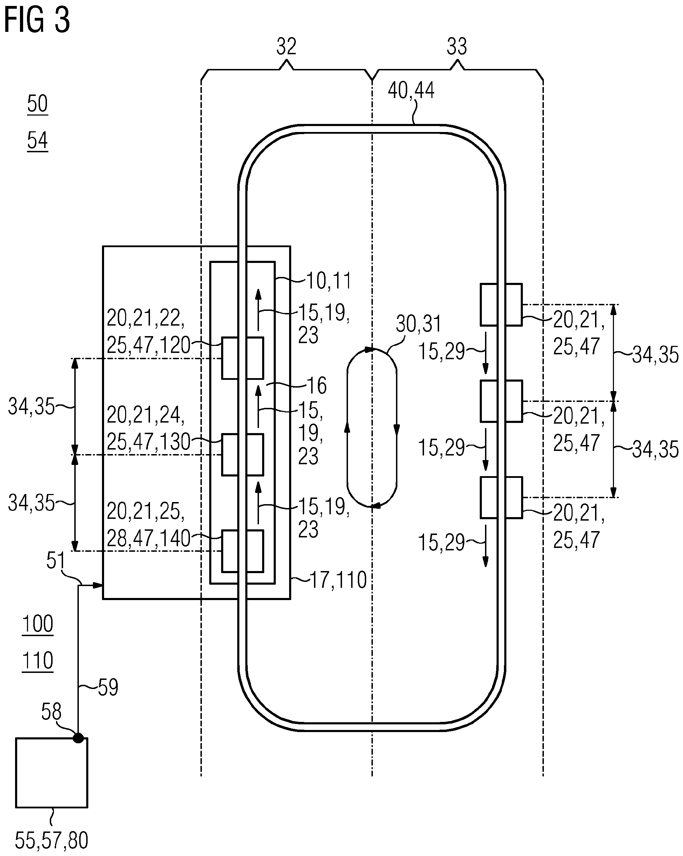

Eine zweite Ausführungsform der beanspruchten Fertigungsvorrichtung 50, die das beanspruchte Herstellungsverfahren 100 durchführt, ist in FIG 3 in einer schematischen Draufsicht dargestellt. Die Fertigungsvorrichtung 50 weist einen Fertigungstisch 17 auf, der in einem ersten Schritt 110 als Substrat 16 für ein additiv herzustellendes Bauteil 10 dient. Das Bauteil 10 wird im beanspruchten Herstellungsverfahren 100 aus einzelnen Materialschichten 11 erzeugt, die aufeinanderliegen. Die Fertigungsvorrichtung 50 weist auch eine Mehrzahl an beweglichen Abgabevorrichtungen 20 auf, die jeweils eine Düse 21 zum Abgeben eines Werkstoffs 25 aufweisen, aus dem die Materialschichten 11 hergestellt werden. Mittels einer ersten beweglichen Abgabevorrichtung 22 wird in einem zweiten Schritt 120 auf dem Substrat 16 eine erste Materialschicht 12 erzeugt, auf der wiederum in einem dritten Schritt 130 mittels einer zweiten beweglichen Abgabevorrichtung 24 eine zweite Materialschicht 14 erzeugt wird. Zwischen der ersten und zweiten beweglichen Abgabevorrichtung 22, 24 liegt eine Umlaufdistanz 34 vor, durch den wiederum eine Laufdistanzdauer 35 zwischen der ersten und zweiten beweglichen Abgabevorrichtung 22, 24 vorliegt. Die erste Materialschicht 12 ist bereits zumindest teilweise erstarrt, wenn die zweite Materialschicht 14 auf die erste Materialschicht 12 aufgebracht wird. Somit werden die erste und zweite Materialschicht 12, 14 zumindest teilweise gleichzeitig erzeugt. Analog wird in einem vierten Schritt 140 zumindest teilweise gleichzeitig eine dritte Materialschicht 18 mittels einer dritten beweglichen Abgabevorrichtung 28 auf der zweiten Materialschicht 14 erzeugt.

Die beweglichen Abgabevorrichtungen 20 sind jeweils auf einem Schlitten 47 angebracht, der auf einer Schiene 44 beweglich ist, die im Wesentlichen als geschlossene Schleife ausgebildet ist. Die Schiene 44 gehört zu einer Führungsvorrichtung 40 und ist im Wesentlichen als Linearmotor ausgebildet. Durch die Führungsschiene 44 wird den Schlitten 47 eine gemeinsame Bahn 15 vorgegeben, der diese bei einem Umlauf 30 entlang der Führungsvorrichtung 40 in einer Umlaufrichtung 31 folgen. Die beweglichen Abgabevorrichtungen 20 durchlaufen bei einem Umlauf 30 einen Arbeitsbereich 32 und einen Rücklaufbereich 33. Im Arbeitsbereich 32 erfolgt durch die beweglichen Abgabevorrichtungen 20 ein Abgeben von Werkstoff 25 zum Erzeugen von Materialschichten 11, während im Rücklaufbereich 33 die beweglichen Abgabevorrichtungen 20 abkühlen und/oder eine Selbstdiagnose durchführen. Die Schlitten 47 sind separat ansteuerbar, so dass jede der beweglichen Abgabevorrichtungen 20 eine separat einstellbare Bahngeschwindigkeit 19 aufweisen kann. Im Arbeitsbereich 32 ist die Bahngeschwindigkeit 19 der beweglichen Abgabevorrichtungen 20 auf eine Arbeitsgeschwindigkeit 23 eingestellt. Da die Schlitten 47 in puncto Bahngeschwindigkeit 19 separat ansteuerbar sind, können die Umlaufdistanzen 34 im Arbeitsbereich 32 unterschiedlich ausgebildet sein.

Die Schiene 44 der Führungsvorrichtung 40 ist als geschlossene Schleife im Wesentlichen in einer Ebene parallel zum Fertigungstisch 17 ausgebildet. Dadurch wird in FIG 3 eine Karussell-Anordnung 54 verwirklicht. Bei einem Eintritt einer beweglichen Abgabevorrichtung 20 in den Rücklaufbereich 33 erfolgt ein Beschleunigen der beweglichen Abgabevorrichtung 20 auf eine Rücklaufgeschwindigkeit 29. Dadurch wird der entsprechende Schlitten 47, und damit auch die entsprechende bewegliche Abgabevorrichtung 20, zum Fertigungstisch 17 geführt. Eine Aufenthaltsdauer im Rücklaufbereich 33 wird minimiert und so die Auslastung der beweglichen Abgabevorrichtungen 20 erhöht. Dadurch kommt die Fertigungsvorrichtung 50 mit einem Minimum an beweglichen Abgabevorrichtungen 20 aus.

Die Ansteuerung der Führungsvorrichtung 40, der Schlitten 47 und/oder zumindest einer der beweglichen Abgabevorrichtungen 20 erfolgt mittels einer Steuereinheit 55, die als übergeordnete Steuereinheit 57 ausgebildet ist. Die Steuereinheit 51 verfügt über eine Schnittstelle 58, die über die Datenverbindung 59 ein Ausgeben von Steuerbefehlen 51 an die Fertigungsvorrichtung 50 erlaubt. Die übergeordnete Steuereinheit 57 kann dabei als Leitrechner, Speicherprogrammierbare Steuerung oder als Computer-Cloud ausgebildet sein. Dementsprechend kann die Datenverbindung 59 als Netzwerkkabel, als Funkverbindung oder als Internetverbindung ausgebildet sein. Die Steuereinheit 55 ist ferner mit einem Computerprogrammprodukt 80 ausgestattet, das dazu ausgebildet ist, das beanspruchte Herstellungsverfahren 100 auf der Fertigungsvorrichtung 50 umzusetzen.

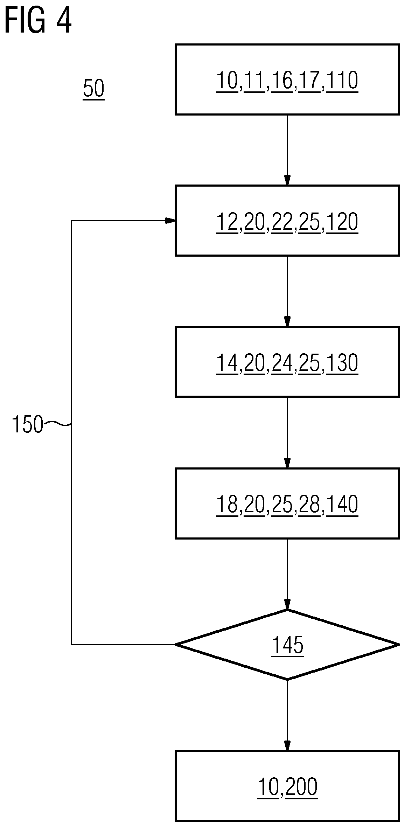

FIG 4 zeigt schematisch ein Ablaufdiagramm einer zweiten Ausführungsform des beanspruchten Herstellungsverfahrens 100. Das Herstellungsverfahren 100 geht von einem ersten Schritt 110 aus, in dem ein Substrat 16 zur Verfügung gestellt wird, das als Grundlage für ein zu fertigenden Bauteil 10 dient. Die Herstellung des Bauteils 10 erfolgt dabei additiv in mehreren Materialschichten 11. Das Substrat 16 ist dabei ein Fertigungstisch 17 einer Fertigungsvorrichtung 50 eingesetzt wird. Die Fertigungsvorrichtung 10 weist bewegliche Abgabevorrichtungen 20 auf, durch die die Materialschichten 11 erzeugt werden. In einem darauffolgenden zweiten Schritt 120 erfolgt ein Erzeugen einer ersten Materialschicht 12 mittels einer ersten beweglichen Abgabevorrichtung 22 auf dem Substrat 16 erzeugt, indem ein Werkstoff 25 abgegeben wird. In einem weiteren dritten Schritt 130 wird eine zweite Materialschicht 14 erzeugt, die unmittelbar auf die erste Materialschicht 12 aufgebracht wird. Die zweite Materialschicht 14 wird dabei von einer zweiten beweglichen Abgabevorrichtung 24 erzeugt, die auf einer gemeinsamen Bahn 1 mit der ersten beweglichen Abgabevorrichtung 22 bewegt wird, die den gleichen Werkstoff 25 abgibt wie die erste bewegliche Abgabevorrichtung 22.

Der zweite und dritte Schritt 120, 130 erfolgen zumindest teilweise gleichzeitig, so dass die zweite Materialschicht 14 erzeugt wird, während die erste Materialschicht 12 noch erzeugt wird. Analog wird in einem vierten Schritt 140 mittels einer dritten beweglichen Abgabevorrichtung 28 eine dritte Materialschicht 18 aus dem abgegebenen Werkstoff 25 erzeugt, die unmittelbar auf der zweiten Materialschicht 14 aufgebracht wird. Auch der vierte Schritt 140 erfolgt zumindest teilweise gleichzeitig mit dem zweiten und dritten Schritt 120, 130.

Das Herstellungsverfahren 100 umfasst ferner einen Verzweigungspunkt 145, in dem geprüft wird, ob das herzustellende Bauteil 10 fertig ist. Wenn das herzustellende Bauteil 10 noch nicht fertig ist, erfolgt eine Rückführschleife 150, durch die zumindest die erste bewegliche Abgabevorrichtung 22 zum zweiten Schritt 120 zurückgeführt wird. Bei einem erneuten Durchlaufen des zweiten und dritten Schritts 120, 130 sind Prozessparameter, wie beispielsweise eine vertikale Positionierung der beweglichen Abgabevorrichtungen 20, 22, 24, eine Zufuhr von Wärme für den Ruheprozess, eine Temperatur des Werkstoffs 25 und/oder eine vertikale Positionierung der Schleusen 37 des Fertigungstisches 17 möglich. Wenn das herzustellende Bauteil 10 fertig ist, erreicht das Herstellungsverfahren 100 einen Endzustand 200, in dem das Bauteil 10 der Fertigungsvorrichtung 50 entnehmbar ist.

## Patentansprüche

1. Verfahren (100) zur additiven Herstellung eines Bauteils (10), das eine Mehrzahl an Materialschichten (11, 12, 14, 18) umfasst, mittels einer Mehrzahl an beweglichen Abgabevorrichtungen (20, 22, 24, 28), umfassend die Schritte:
a) Bereitstellen eines Substrats (16) zu einem Erzeugen der Materialschichten (11, 12, 14, 18);
b) Erzeugen einer ersten Materialschicht (12) auf dem Substrat (16) mittels einer ersten beweglichen Abgabevorrichtung (22);
c) Erzeugen einer zweiten Materialschicht (14) auf der ersten Materialschicht (12) mittels einer zweiten beweglichen Abgabevorrichtung (24);
**dadurch gekennzeichnet, dass** die Schritte b) und c) zumindest teilweise gleichzeitig erfolgen.

2. Verfahren (100) nach Anspruch 1, **dadurch gekennzeichnet, dass** die zweite bewegliche Abgabevorrichtung (24) einer Bahn (15) der ersten beweglichen Abgabevorrichtung (22) folgt.

3. Verfahren (100) nach Anspruch 1 oder 2, **dadurch gekennzeichnet, dass** die erste und zweite Abgabevorrichtung (22, 24) an einer Führungsvorrichtung (40) umlaufen.

4. Verfahren (100) nach einem der Ansprüche 1 bis 3, **dadurch gekennzeichnet, dass** während der Schritte b) und c) eine Laufdistanzdauer (35) zwischen der ersten und zweiten beweglichen Abgabevorrichtung (22, 24) mindestens einer Mindestruhedauer der ersten Materialschicht (12) entspricht.

5. Verfahren (100) nach einem der Ansprüche 1 bis 4, **dadurch gekennzeichnet, dass** die erste und zweite bewegliche Abgabevorrichtung (22, 24) zwischen einem Arbeitsbereich (32) und einem Rücklaufbereich (33) umlaufen.

6. Verfahren (100) nach einem der Ansprüche 1 bis 5, **dadurch gekennzeichnet, dass** die zweite bewegliche Abgabevorrichtung (24) während des Schritts c) eine höhere Distanz (38) zum Substrat (16) aufweist als die erste bewegliche Abgabevorrichtung (22).

7. Verfahren (100) nach einem der Ansprüche 1 bis 6, **dadurch gekennzeichnet, dass** zumindest die erste und zweite bewegliche Abgabevorrichtung (22, 24) in nur einer Umlaufrichtung (31) umlaufen.

8. Verfahren (100) nach einem der Ansprüche 1 bis 7, **dadurch gekennzeichnet, dass** in einem weiteren Schritt d) ein Aufbringen einer dritten Materialschicht (18) mittels einer dritten beweglichen Abgabevorrichtung (28) erfolgt, wobei die Schritte b), c) und d) zumindest teilweise gleichzeitig erfolgen.

9. Verfahren (100) nach einem der Ansprüche 1 bis 8, **dadurch gekennzeichnet, dass** das Verfahren (100) als Schmelzschichtungsverfahren, als Multi-Binder-Jet-Modelling-Verfahren, als Laminated-Object-Manufacturing-Verfahren, oder als Kaltgasspritzverfahren ausgebildet ist.

10. Fertigungsvorrichtung (30) zum additiven Herstellen eines Bauteils (10), umfassend einen Fertigungstisch (17) und eine Mehrzahl an beweglichen Abgabevorrichtungen (20, 22, 24, 28) für einen Werkstoff (25), wobei zumindest eine erste und eine zweite bewegliche Abgabevorrichtung (22, 24) an einer Führungsvorrichtung (40) angebracht sind, **dadurch gekennzeichnet, dass** zumindest die erste und zweite Abgabevorrichtung (22, 24) zu einem Umlauf (30) um die Führungsvorrichtung (40) ausgebildet sind.

11. Fertigungsvorrichtung (30) nach Anspruch 10, **dadurch gekennzeichnet, dass** die Führungsvorrichtung (40) mit den beweglichen Abgabevorrichtungen (20, 22, 24, 28) in einer Förderband-Anordnung (53) oder in einer Karussell-Anordnung (54) angebracht ist.

12. Fertigungsvorrichtung (30) nach Anspruch 10 oder 11, **dadurch gekennzeichnet, dass** zumindest die erste und zweite bewegliche Abgabevorrichtung (22, 24) fest auf einem Gurt (42) angeordnet sind, der um die Führungsvorrichtung (40) umläuft.

13. Fertigungsvorrichtung (30) nach Anspruch 10 oder 11, **dadurch gekennzeichnet, dass** jeweils die erste und zweite bewegliche Abgabevorrichtung (22, 24) auf einem Schlitten (47) angeordnet sind, wobei jeweils eine Bahngeschwindigkeit (19) der Schlitten (47) unabhängig einstellbar ist.

14. Computerprogrammprodukt (80) zum Einstellen zumindest einer Bahngeschwindigkeit (19) zumindest einer beweglichen Abgabevorrichtung (22) bei einem Umlauf (30) um eine Führungsvorrichtung (40), zu einem Betätigen mindestens einer beweglichen Abgabevorrichtung (20, 22, 24, 28), das in einer Steuereinheit (55) einer Fertigungsvorrichtung (50) ausführbar ausgebildet ist, **dadurch gekennzeichnet, dass** das Computerprogrammprodukt (80) zu einer Durchführung eines Verfahrens (100) nach einem der Ansprüche 1 bis 9 ausgebildet ist.

15. Steuereinheit (55), umfassend eine Schnittstelle (58) zum Ausgeben von Steuerbefehlen (51) an bewegliche Abgabevorrichtungen (20, 22, 24, 28) einer Fertigungsvorrichtung (50) für additive Fertigung, **dadurch gekennzeichnet, dass** die Steuereinheit (55) zur Durchführung eines Verfahrens (100) nach einem der Ansprüche 1 bis 9 ausgebildet ist.
